# EUROPEAN PATENT APPLICATION

(11) **EP 4 693 181 A1**
(43) Date of publication of application: **11.02.2026**
(21) Application number: 24206709.8
(22) Date of filing: 15.10.2024
(51) Int. Cl.: G06T 7/11, G06T 7/00, G01N 23/04

(54) **OBJECT DETECTION METHOD AND SYSTEM**

(30) Priority: 09.08.2024 KR 20240106975
(71) Applicant: SSTLabs Co., Ltd., Seongnam-si, Gyeonggi-do 13486 (KR)
(72) Inventor: CHOI, Kwangyun, 12736 Gwangju-si, Gyeonggi-do (KR); JANG, Minseop, 16836 Yongin-si, Gyeonggi-do (KR); HONG, Yeeun, 16313 Suwon-si, Gyeonggi-do (KR)
(74) Representative: M. Zardi & Co S.A.

(57) **Abstract**

Provided is an object detection method and system capable of increasing a detection rate for hazardous substances such as liquid explosives as well as existing explosives, the object detection method including (a) preparing an X-ray image of a subject, (b) calculating effective atomic number values (Z_{eff}) by using the X-ray image, and (c) segmenting a target object image from the X-ray image by using the effective atomic number values and energy-band-based multi-energy image reconstruction.

## Description

### CROSS-REFERENCE TO RELATED PATENT APPLICATION

This application claims the benefit of Korean Patent Application No. 10-2024-0106975, filed on AUGUST 9, 2024, in the Korean Intellectual Property Office, the disclosure of which is incorporated herein in its entirety by reference.

### BACKGROUND OF THE INVENTION

### 1. Field of the Invention

The present invention relates to an object detection method and system and, more particularly, to an object detection method and system capable of increasing a detection rate for hazardous substances such as liquid explosives as well as existing explosives.

The present invention relates to the research which is supported by the Korea Agency for Infrastructure Technology Advancement (KAIA) grant funded by the Ministry of Land, Infrastructure and Transport (MOLIT), the Republic of Korea (Grant: 1615013162, RS-2021-KA162822).

### 2. Description of the Related Art

An X-ray generator is a device for generating an X-ray by colliding an accelerated electron beam with an anode target, and images of various energy bands or the like may be obtained using the X-ray generator, i.e., an X-ray detector.

The X-ray generator may be used for computed tomography (CT) scanners in various clinical fields such as diagnosis, real-time imaging during surgery, and prognosis evaluation after surgery. In addition to medical imaging diagnostic devices, the X-ray generator is also being widely used for airport cargo screening or nondestructive inspection of industrial products such as microstructures.

For example, CT scanners or X-ray security scanners may irradiate an X-ray onto a subject, some of which is absorbed by the subject, detecting the remaining transmitted radiation with multiple detectors arranged in a linear or planar shape, and then converting output data of each detector into an electrical signal to reconstruct an image, thereby obtaining a cross-sectional image of the subject.

When used for cargo screening at airports, the CT scanners may be utilized in a wide variety of ways, for example, to output an alert signal by detecting hazardous substances such as various solid explosives or narcotics.

However, the existing CT scanners may simply specify objects or infer properties thereof only based on the shapes thereof in an X-ray image. The properties of objects with similar shapes may not be easily accurately predicted and, particularly, liquid-type hazardous substances such as nitroglycerin, ethylene glycol dinitrate (EDGN), methyl nitrate, hydrogen peroxide, alcohol, benzyl alcohol, methyl alcohol, ethanol, and sulfur, or narcotics such as heroin, cocaine, opium, and morph may not be easily accurately detected merely based on the external shapes thereof. Specifically, the types or properties of liquid substances having no shape and contained in containers may not be easily accurately predicted and thus a very low accuracy or detection rate may be exhibited.

### SUMMARY OF THE INVENTION

The present invention provides an object detection method and system capable of significantly increasing the accuracy of object specification and property prediction and a detection rate for not only existing hazardous substances but also liquid substances such as liquid explosives or narcotics. However, the above description is an example, and the scope of the present invention is not limited thereto.

According to an aspect of the present invention, there is provided an object detection method including (a) preparing an X-ray image of a subject, (b) calculating effective atomic number values (Z_{eff}) by using the X-ray image, and (c) segmenting a target object image from the X-ray image by using the effective atomic number values and energy-band-based multi-energy image reconstruction.

Each of the effective atomic number values (Z_{eff}) may be a value proportional to an accumulated sum of nuclei existing on a path of an X-ray.

Step (a) may include (a-1) loading an X-ray image, (a-2) determining whether the X-ray image is normal, and outputting an error message when the X-ray image is not normal, and (a-3) standardizing the X-ray image by correcting image distortion based on values of a background region of the X-ray image, or correcting a histogram of the X-ray image to be similar to that of a photographic image, when the X-ray image is normal.

Step (b) may include (b-1) primarily calculating effective atomic number values (Z_{eff}) of the corrected X-ray image, (b-2) extracting only a region of interest (ROI) image by processing and removing an unnecessary image of a tray supporting the subject, as a background, and (b-3) segmenting an object image from the X-ray image and a sinogram obtained by visualizing the X-ray image, by using an artificial neural network model.

The artificial neural network model may include a cycle-consistent generative adversarial network (cycle-GAN).

Step (c) may include (c-1) dividing the target object image into energy-band-based images in consideration of adjacency or overlapping of the subject, and segmenting individual object images by using the energy-band-based images, in a default detection mode.

Step (c-1) may include (c-1-1) setting energy bands by using the effective atomic number values, (c-1-2) removing an image other than objects of interest, and (c-1-3) making an object list with the objects of interest by processing the target object image into N-level energy-band-based images (N is a natural number) from a low density to a high density based on the set energy bands, and adding and integrating effective atomic number and density values of an object from the object list corresponding to a target object, into a table.

Step (c) may include (c-2) secondarily calculating effective atomic number values (Z_{eff}) by ROI and segmenting a liquid of interest image, in a liquid detection mode.

Step (c-2) may include (c-2-1) setting ROIs and extracting an initial effective atomic number value (ZI0, Z_{eff} Initial Value(0)) by ROI, (c-2-2) secondarily calculating effective atomic number values (Z_{eff}) by ROI, (c-2-3) extracting an outline of a container of an object of interest by ROI by using the effective atomic number values, and calculating effective atomic number and density values of the container based on the outline to specify a shape or type of the container, and (c-2-4) removing noise and then extracting a region of a liquid inside the container, and calculating effective atomic number and density values of the liquid to predict a type or volume of the liquid.

In step (c-2-1), for accurate object detection, a region other than objects inside the tray may be excluded from the ROIs in consideration of sizes, lengths, and complexity of the objects.

In step (c-2-3), to separate an extraction region from a background region, a threshold value of image pixels may be designated, and a container region may be separated from a background of an image by using a difference in brightness or color based on the threshold value.

In step (c-2-4), to remove noise caused by a difference in properties between a container and a container cap for sealing the container, a height of a center of an object may be measured and an actual volume of the liquid may be detected based on a degree of filling.

In step (c-2-4), the type of the liquid may be predicted in consideration of a substance having a similar distribution of dual-energy-based attenuation rates (R) from a known substance table based on dual energies using high energy and low energy histograms of an internal region from among an entire region and the internal region.

In step (c-2-4), the dual-energy-based attenuation rates (R) may have values similar to the effective atomic number values (Z_{eff}), and may be ratios between background pixel values (PVs) of a high energy image and background PVs of a low energy image to dilute an effect of a transmission depth or density of an object.

In step (c-2-4), properties may be predicted based on a property table in which substances with similar properties in a density/effective atomic number value graph having the density (g/cm³) as a first axis (or X axis) and the effective atomic number value (Z_{eff}) as a second axis (or Y axis) are grouped together.

The object detection method may further include (d) comprehensively detecting a hazardous object in consideration of a weight using multi-view images captured from multiple angles.

In step (d), the weight may be a number of target objects detected in an image captured from each view, and for the same subject, a highest weight may be determined as a number of objects.

According to another aspect of the present invention, there is provided an object detection system including an image inputter for inputting an X-ray image of a subject, an effective atomic number value calculator for calculating effective atomic number values (Z_{eff}) by using the X-ray image, a target segmenter for segmenting a target object image from the X-ray image by using the effective atomic number values and energy-band-based multi-energy image reconstruction, and a multi-view detector for comprehensively detecting a hazardous object in consideration of a weight using multi-view images captured from multiple angles, wherein the image inputter includes an image loader for loading an X-ray image, an error outputter for determining whether the X-ray image is normal, and outputting an error message when the X-ray image is not normal, and a standardizer for standardizing the X-ray image by correcting image distortion based on values of a background region of the X-ray image, or correcting a histogram of the X-ray image to be similar to that of a photographic image, when the X-ray image is normal, wherein the effective atomic number value calculator includes a primary effective atomic number value calculator for primarily calculating effective atomic number values (Z_{eff}) of the corrected X-ray image, a region of interest (ROI) extractor for extracting only a ROI image by processing and removing an unnecessary image of a tray supporting the subject, as a background, and an object image segmenter for segmenting an object image from the X-ray image and a sinogram obtained by visualizing the X-ray image, by using an artificial neural network model, and wherein the target segmenter includes a default detector for dividing the target object image into energy-band-based images in consideration of adjacency or overlapping of the subject, and segmenting individual object images by using the energy-band-based images, in a default detection mode, and a liquid detector for secondarily calculating effective atomic number values (Z_{eff}) by ROI and segmenting a liquid of interest image, in a liquid detection mode.

The default detector may include an energy band setter for setting energy bands by using the effective atomic number values, an unnecessary image remover for removing an image other than objects of interest, and an energy-band-based image processor for making an object list with the objects of interest by processing the target object image into N-level energy-band-based images (N is a natural number) from a low density to a high density based on the set energy bands, and adding and integrating effective atomic number and density values of an object from the object list corresponding to a target object, into a table.

The liquid detector may include a ROI setter for setting ROIs and extracting an initial effective atomic number value ZI0 by ROI, a secondary effective atomic number value calculator for secondarily calculating effective atomic number values (Z_{eff}) by ROI, a container identifier for extracting an outline of a container of an object of interest by ROI by using the effective atomic number values, and calculating effective atomic number and density values of the container based on the outline to specify a shape or type of the container, and a liquid identifier for removing noise and then extracting a region of a liquid inside the container, and calculating effective atomic number and density values of the liquid to predict a type or volume of the liquid.

### BRIEF DESCRIPTION OF THE DRAWINGS

The above and other features and advantages of the present invention will become more apparent by describing in detail embodiments thereof with reference to the attached drawings in which:
FIG. 1 is a block diagram of an object detection system according to some embodiments of the present invention;
FIG. 2 is a block diagram of an image inputter of the object detection system of FIG. 1;
FIG. 3 is a block diagram of an effective atomic number value calculator of the object detection system of FIG. 1;
FIG. 4 is a block diagram of a target segmenter of the object detection system of FIG. 1;
FIG. 5 is a flowchart of an object detection method according to some embodiments of the present invention;
FIG. 6 is a flowchart of step (a) of the object detection method of FIG. 5;
FIG. 7 is a flowchart of step (b) of the object detection method of FIG. 5;
FIG. 8 is a flowchart of step (c) of the object detection method of FIG. 5;
FIG. 9 is a flowchart of step (c-1) of the object detection method of FIG. 5;
FIG. 10 is a flowchart of step (c-2) of the object detection method of FIG. 5;
FIG. 11 includes images showing an example of applying energy-band-based object segmentation technique according to some embodiments of the present invention;
FIG. 12 is an image showing an example of applying energy-band-based image processing technique according to some embodiments of the present invention;
FIG. 13 includes images showing multi-view weight calculation object detection technique according to some embodiments of the present invention;
FIG. 14 includes images showing explosive detection results according to some embodiments of the present invention; and
FIG. 15 is a table showing previous relative detection rates versus increased relative detection rates of an object detection method and system according to some embodiments of the present invention.

### DETAILED DESCRIPTION OF THE INVENTION

The present invention may, however, be embodied in many different forms and should not be construed as being limited to embodiments set forth herein; rather, these embodiments are provided so that this disclosure will be thorough and complete, and will fully convey the concept of the invention to one of ordinary skill in the art. In the drawings, the thicknesses or sizes of layers are exaggerated for clarity and convenience of explanation.

Hereinafter, the present invention will be described in detail by explaining embodiments of the invention with reference to the attached drawings.

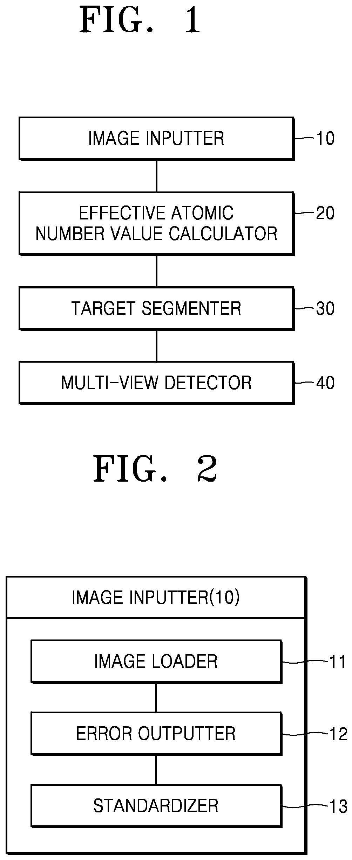

FIG. 1 is a block diagram of an object detection system according to some embodiments of the present invention.

Initially, as shown in FIG. 1, the object detection system according to some embodiments of the present invention may include an image inputter 10 for inputting an X-ray image of any of various subjects such as airport baggage or ship cargo, an effective atomic number value calculator 20 for calculating effective atomic number values Z_{eff} by using the X-ray image, a target segmenter 30 for segmenting a target object image from the X-ray image by using the effective atomic number values and energy-band-based multi-energy image reconstruction, and a multi-view detector 40 for comprehensively detecting a hazardous object in consideration of a weight using multi-view images captured from multiple angles.

Herein, the image inputter 10, the effective atomic number value calculator 20, the target segmenter 30, and the multi-view detector 40 may be configured in the form of a wide variety of controllers such as microprocessors, microchips, control circuits, printed circuit boards, substrates, central processing units, arithmetic units, storage devices storing various programs such as batch programs, program processors, computers, server computers, clouds, networks, smartphones, smart pads, and various smart devices.

Therefore, according to the object detection system of the present invention, a series of processes for inputting an X-ray image of a subject, calculating effective atomic number values Z_{eff} by using the X-ray image, segmenting a target object image from the X-ray image by using the effective atomic number values and energy-band-based multi-energy image reconstruction, and comprehensively detecting a hazardous object in consideration of a weight using multi-view images captured from multiple angles may be performed.

FIG. 2 is a block diagram of the image inputter 10 of the object detection system of FIG. 1.

Specifically, for example, as shown in FIG. 2, the image inputter 10 may include an image loader 11 for loading an X-ray image, an error outputter 12 for determining whether the X-ray image is normal, and outputting an error message when the X-ray image is not normal, and a standardizer 13 for standardizing the X-ray image by correcting image distortion based on values of a background region of the X-ray image, or correcting a histogram of the X-ray image to be similar to that of a photographic image, when the X-ray image is normal.

Therefore, according to the image inputter 10, a series of processes for loading an X-ray image, determining whether the X-ray image is normal, and outputting an error message when the X-ray image is not normal, and standardizing the X-ray image by correcting image distortion based on values of a background region of the X-ray image, or correcting a histogram of the X-ray image to be similar to that of a photographic image, when the X-ray image is normal may be performed.

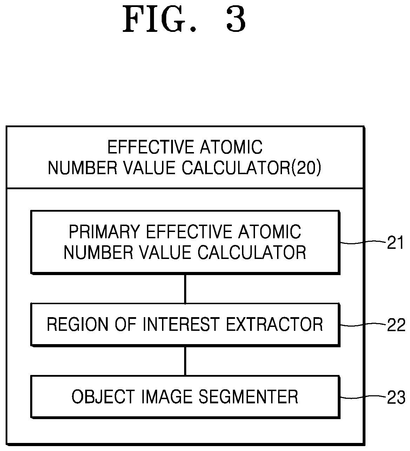

FIG. 3 is a block diagram of the effective atomic number value calculator 20 of the object detection system of FIG. 1.

Specifically, for example, as shown in FIG. 3, the effective atomic number value calculator 20 may include a primary effective atomic number value calculator 21 for primarily calculating effective atomic number values Z_{eff} of the corrected X-ray image, a region of interest (ROI) extractor 22 for extracting only a ROI image by processing and removing an unnecessary image of a tray supporting the subject, as a background, and an object image segmenter 23 for segmenting an object image from the X-ray image and a sinogram obtained by visualizing the X-ray image, by using an artificial neural network model.

Therefore, according to the effective atomic number value calculator 20, a series of processes for primarily calculating effective atomic number values Z_{eff} of the corrected X-ray image, extracting only a ROI image by processing and removing an unnecessary image of a tray supporting the subject, as a background, and segmenting an object image from the X-ray image and a sinogram obtained by visualizing the X-ray image, by using an artificial neural network model may be performed.

Herein, according to the present invention, a multi-scale neural network is used to remove global linear noise caused by sparse views, and to overcome the performance limitations of a reconstructed image, an object image may be segmented using an artificial neural network model from an X-ray image and a sinogram obtained by visualizing the X-ray image.

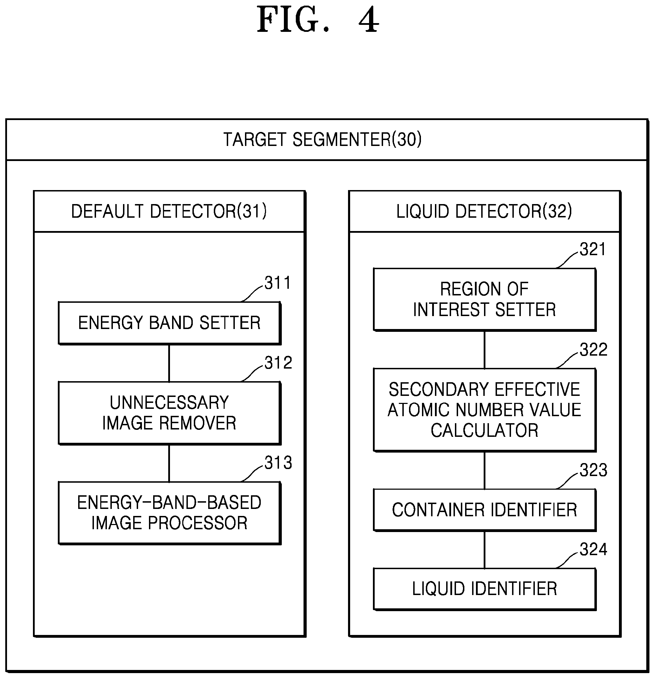

FIG. 4 is a block diagram of the target segmenter 30 of the object detection system of FIG. 1.

Specifically, for example, as shown in FIG. 4, the target segmenter 30 may include a default detector 31 for dividing the target object image into energy-band-based images in consideration of the adjacency or overlapping of the subject, and segmenting individual object images by using the energy-band-based images, in a default detection mode, or a liquid detector 32 for secondarily calculating effective atomic number values Z_{eff} by ROI and segmenting a liquid of interest image, in a liquid detection mode.

Therefore, according to the target segmenter 30, the default detection mode and the liquid detection mode may be performed selectively or together, and a series of processes for dividing the target object image into energy-band-based images in consideration of the adjacency or overlapping of the subject, and segmenting individual object images by using the energy-band-based images, in a default detection mode, or secondarily calculating effective atomic number values Z_{eff} by ROI and segmenting a liquid of interest image, in a liquid detection mode may be performed.

The default detector 31 may include, for example, an energy band setter 311 for setting energy bands by using the effective atomic number values, an unnecessary image remover 312 for removing an image other than objects of interest, and an energy-band-based image processor 313 for making an object list with the objects of interest by processing the target object image into N-level energy-band-based images (N is a natural number) from a low density to a high density based on the set energy bands, and adding and integrating effective atomic number and density values of an object from the object list corresponding to a target object, into a table.

For example, when an X-ray generator, i.e., an X-ray detector, with a capacity of 160 kilovolt (kV) is used, an X-ray of a band ranging from about 40 keV(kiloelectron volt) to about 160 keV may be emitted, an object list of objects of interest may be made by processing dual images by using, for example, an image of a high energy band of 140 kV or an image of a low energy band of 80 kV, and effective atomic number and density values of an object from the object list corresponding to a target object may be added and integrated into a table.

Therefore, according to the default detector 31, a series of processes for setting energy bands by using the effective atomic number values, removing an image other than objects of interest, and making an object list with the objects of interest by processing the target object image into N-level energy-band-based images (N is a natural number) from a low density to a high density based on the set energy bands, and adding and integrating effective atomic number and density values of an object from the object list corresponding to a target object, into a table may be performed.

The liquid detector 32 may include, for example, a ROI setter 321 for setting ROIs and extracting an initial effective atomic number value ZI0 by ROI, a secondary effective atomic number value calculator 322 for secondarily calculating effective atomic number values Z_{eff} by ROI, a container identifier 323 for extracting an outline of a container of an object of interest by ROI by using the effective atomic number values, and calculating effective atomic number and density values of the container based on the outline to specify the shape or type of the container, and a liquid identifier 324 for removing noise and then extracting a region of a liquid inside the container, and calculating effective atomic number and density values of the liquid to predict the type or volume of the liquid.

Although distortion may occur due to a container and the content of an object when calculating with a general Z_{eff} formula, according to the present invention, a transmission depth (corresponding to a volume) may be calculated and corrected using a side view to detect an actual content of a substance in a container. To remove noise caused by a difference in properties between the container and a container cap, a valid image may be selected from multi-view images, the center of the object may be measured as H, and the actual content of the substance may be detected. That is, considering that a portion discriminated due to the noise caused by the difference in properties between the container and the container cap is processed as a box, a range less than the actual content of the substance may be detected and a portion with the deepest depth may be selected and magnified to detect the actual content of the substance with a minimum substantial error.

In addition, a detectable object range (e.g., liquid explosives) may be limited to the inside of a tray, and a background portion other than the tray may be removed to set an object extraction range. For example, to remove a conveyor belt portion shown at the edge of the image, 3% of the edge may be removed.

Thus, for artificial neural network training, a multi-scale artificial neural network may be trained using an artificial neural network training platform based on analytically reconstructed sparse-view images with linear noise and analytically reconstructed entire-view images without linear noise, and dual energy images may be reconstructed using the trained multi-scale artificial neural network.

Therefore, according to the liquid detector 32, a series of processes for setting ROIs and extracting an initial effective atomic number value ZI0 by ROI, secondarily calculating effective atomic number values Z_{eff} by ROI, extracting an outline of a container of an object of interest by ROI by using the effective atomic number values, and calculating effective atomic number and density values of the container based on the outline to specify the shape or type of the container, and removing noise and then extracting a region of a liquid inside the container, and calculating effective atomic number and density values of the liquid to predict the type or volume of the liquid may be performed.

Therefore, according to the present invention, using effective atomic number values based on an X-ray image and energy-band-based images, the accuracy of object specification and property prediction and a detection rate for not only existing hazardous substances but also liquid substances such as liquid explosives or narcotics may be significantly increased.

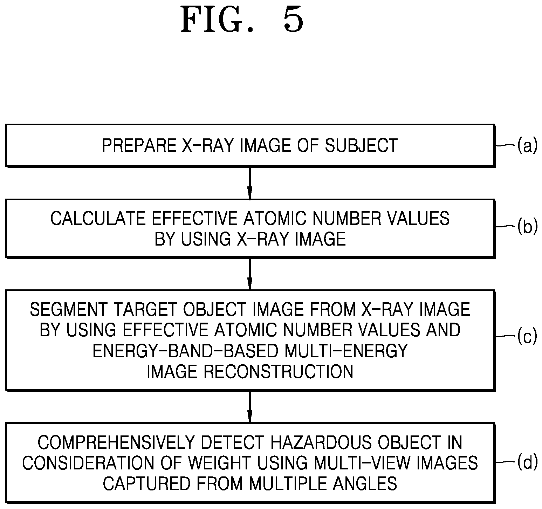

FIG. 5 is a flowchart of an object detection method according to some embodiments of the present invention.

As shown in FIG. 5, as an object detection method using the object detection system according to some embodiments of the present invention, the object detection method according to some embodiments of the present invention may include (a) preparing an X-ray image of a subject, (b) calculating effective atomic number values Z_{eff} by using the X-ray image, (c) segmenting a target object image from the X-ray image by using the effective atomic number values and energy-band-based multi-energy image reconstruction, and (d) comprehensively detecting a hazardous object in consideration of a weight using multi-view images captured from multiple angles.

Herein, each of the effective atomic number values Z_{eff} may be a value proportional to an accumulated sum of nuclei existing on a path of an X-ray.

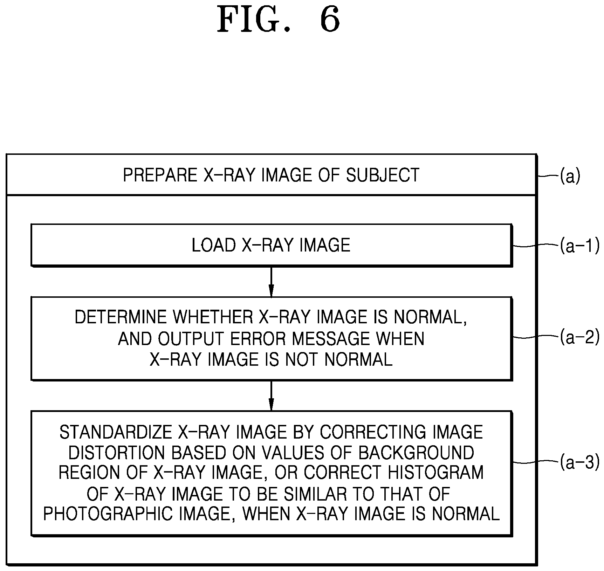

FIG. 6 is a flowchart of step (a) of the object detection method of FIG. 5.

As shown in FIG. 6, step (a) may include (a-1) loading an X-ray image, (a-2) determining whether the X-ray image is normal, and outputting an error message when the X-ray image is not normal, and (a-3) standardizing the X-ray image by correcting image distortion based on values of a background region of the X-ray image, or correcting a histogram of the X-ray image to be similar to that of a photographic image, when the X-ray image is normal.

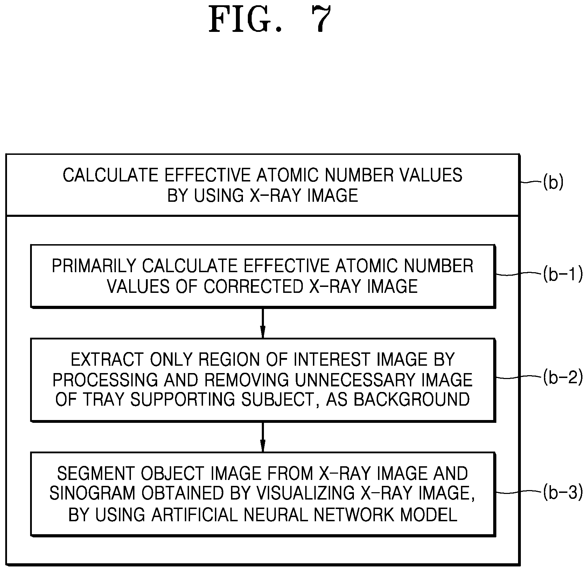

FIG. 7 is a flowchart of step (b) of the object detection method of FIG. 5.

Then, as shown in FIG. 7, step (b) may include (b-1) primarily calculating effective atomic number values Zeff of the corrected X-ray image, (b-2) extracting only a region of interest (ROI) image by processing and removing an unnecessary image of a tray supporting the subject, as a background, and (b-3) segmenting an object image from the X-ray image and a sinogram obtained by visualizing the X-ray image, by using an artificial neural network model.

Herein, the artificial neural network model may include a cycle-consistent generative adversarial network (cycle-GAN).

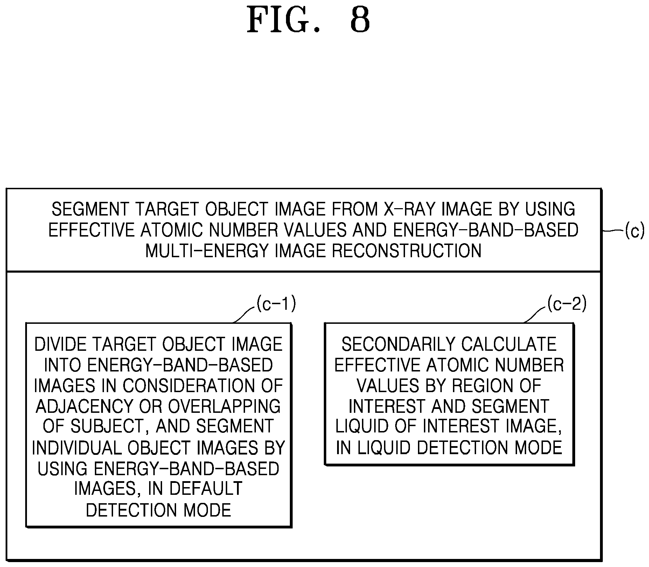

FIG. 8 is a flowchart of step (c) of the object detection method of FIG. 5.

Then, as shown in FIG. 8, step (c) may include (c-1) dividing the target object image into energy-band-based images in consideration of the adjacency or overlapping of the subject, and segmenting individual object images by using the energy-band-based images, in a default detection mode, and/or (c-2) secondarily calculating effective atomic number values Z_{eff} by ROI and segmenting a liquid of interest image, in a liquid detection mode.

Therefore, because an object extraction range (i.e., ROIs) may be set to calculate ZI0 by ROI and extract an object outline by ROI, image processing, analysis, etc. may be performed only on specific regions which are suspected of being explosives in an image, thereby reducing an explosive analysis time and increasing detection accuracy and efficiency.

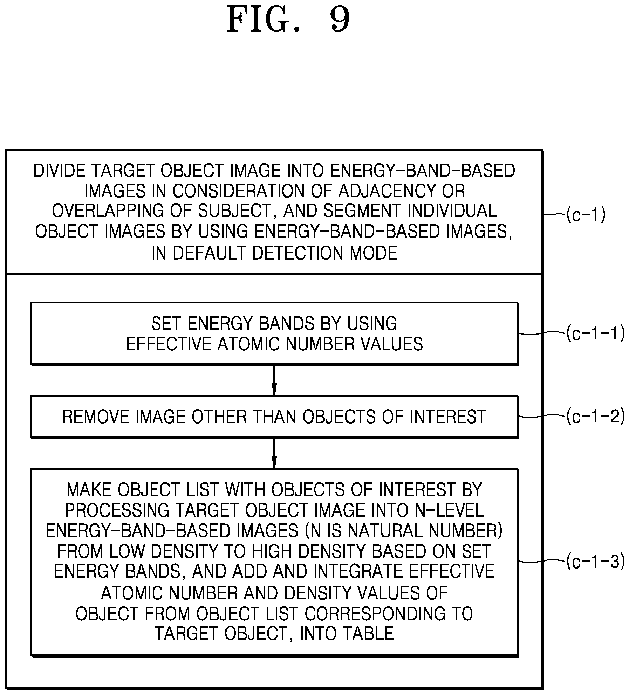

FIG. 9 is a flowchart of step (c-1) of the object detection method of FIG. 5.

Specifically, for example, as shown in FIG. 9, step (c-1) may include (c-1-1) setting energy bands by using the effective atomic number values, (c-1-2) removing an image other than objects of interest, and (c-1-3) making an object list with the objects of interest by processing the target object image into N-level energy-band-based images (N is a natural number) from a low density to a high density based on the set energy bands, and adding and integrating effective atomic number and density values of an object from the object list corresponding to a target object, into a table.

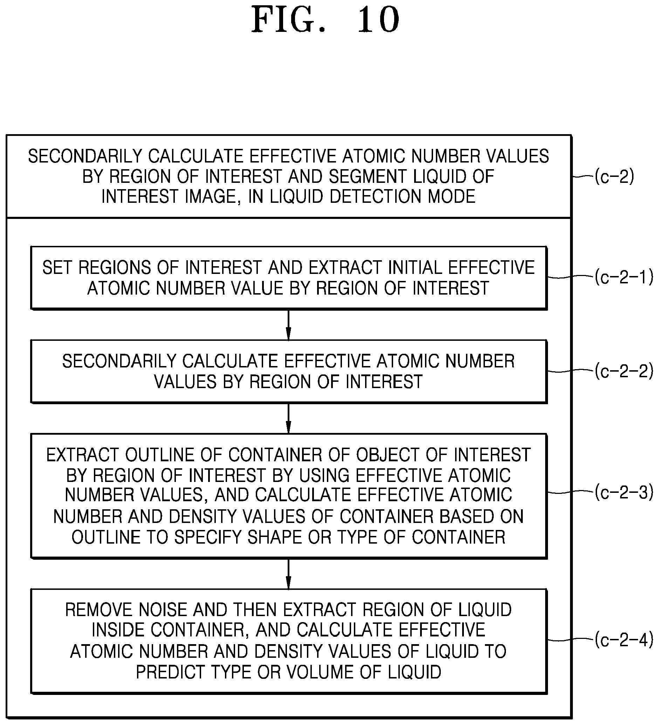

FIG. 10 is a flowchart of step (c-2) of the object detection method of FIG. 5.

Specifically, for example, as shown in FIG. 10, step (c-2) may include (c-2-1) setting ROIs and extracting an initial effective atomic number value ZI0 by ROI, (c-2-2) secondarily calculating effective atomic number values Z_{eff} by ROI, (c-2-3) extracting an outline of a container of an object of interest by ROI by using the effective atomic number values, and calculating effective atomic number and density values of the container based on the outline to specify the shape or type of the container, and (c-2-4) removing noise and then extracting a region of a liquid inside the container, and calculating effective atomic number and density values of the liquid to predict the type or volume of the liquid.

Herein, for example, in step (c-2-1), for accurate object detection, a region other than objects inside the tray may be excluded from the ROIs in consideration of sizes, lengths, and complexity of the objects.

For example, in step (c-2-3), to separate an extraction region from a background region, a threshold value of image pixels may be designated, and a container region may be separated from a background of an image by using a difference in brightness or color based on the threshold value.

For example, in step (c-2-4), to remove noise caused by a difference in properties between a container and a container cap for sealing the container, a height of the center of an object may be measured and an actual volume of the liquid may be detected based on a degree of filling.

For example, in step (c-2-4), the type of the liquid may be predicted in consideration of a substance having a similar distribution of dual-energy-based attenuation rates R from a known substance table based on dual energies using high energy and low energy histograms of an internal region from among an entire region and the internal region.

For example, in step (c-2-4), the dual-energy-based attenuation rates R may have values similar to the effective atomic number values Z_{eff}, and may be ratios between background pixel values (PVs) of a high energy image and background PVs of a low energy image to dilute the effect of a transmission depth or density of an object.

For example, in step (c-2-4), properties may be predicted based on a property table in which substances with similar properties in a density/effective atomic number value graph having the density (g/cm³) as a first axis (or X axis) and the effective atomic number value Zeff as a second axis (or Y axis) are grouped together.

Meanwhile, in step (d) of FIG. 5, the weight may be the number of target objects detected in an image captured from each view, and for the same subject, a highest weight may be determined as the number of objects.

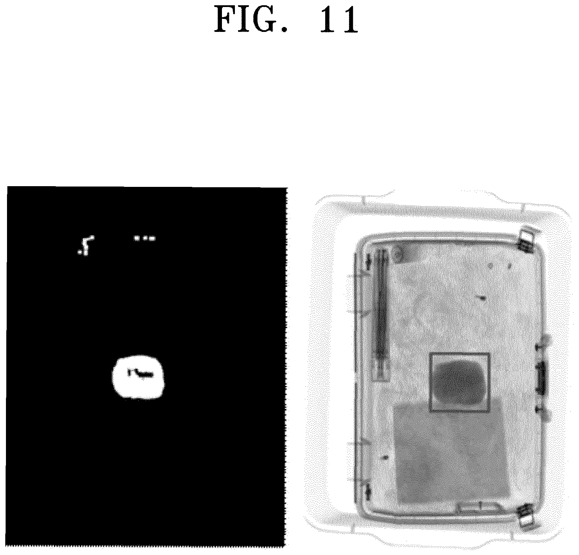

FIG. 11 includes images showing an example of applying energy-band-based object segmentation technique according to some embodiments of the present invention.

As shown in FIG. 11, according to existing object segmentation, as shown in the image, when objects are adjacent or overlapping, the algorithm recognizes the objects as a single object in the segmentation step to frequently cause false detection errors. However, according to the energy-band-based object segmentation technique of the present invention, because objects are segmented on images etched by energy band, only objects in similar energy bands may be recognized as a single object as shown in image.

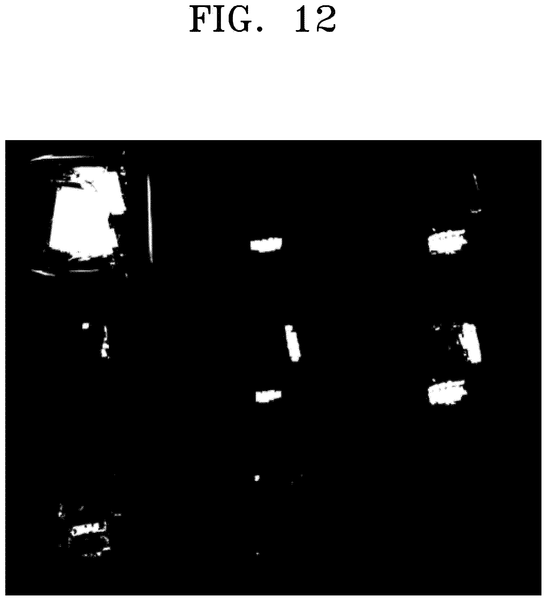

FIG. 12 is an image showing an example of applying energy-band-based image processing technique according to some embodiments of the present invention.

As shown in FIG. 12, according to the present invention, to detect target objects which are overlapping or hidden, the target object image may be processed into, for example, a total of 7-level energy-band-based images from a low density to a high density. An object list may be made with all objects in the image based on the energy-band-based images, and Zeff and density values of an object corresponding to a target object from the object list may be added and integrated into a table.

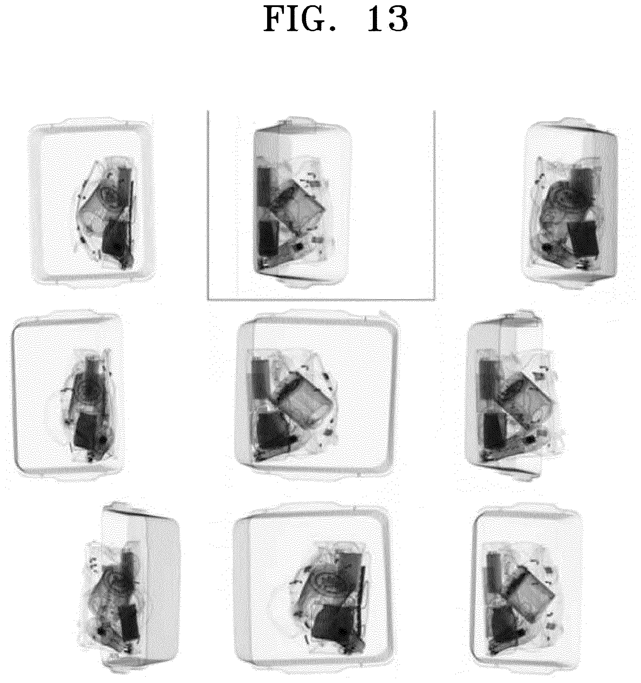

FIG. 13 includes images showing multi-view weight calculation object detection technique according to some embodiments of the present invention.

As shown in FIG. 13, according to the present invention, to improve the performance of a detection rate and a false detection rate, when object detection is performed on a bag set, a result of comprehensively calculating multi-view detection results based on a weight may be exhibited.

For example, the weight may be calculated based on the number of views in which the algorithm determines the same object as a target object. When an object is determined as a target object in three views and another object is determined as a target object in one view, the former may be applied as the weight.

Therefore, for example, after the multi-view object detection technique is applied, a detection rate for hazardous solid substances has increased by more than 80% and a detection rate for hazardous liquid substances has increased by more than 50% compared to previous detection performance.

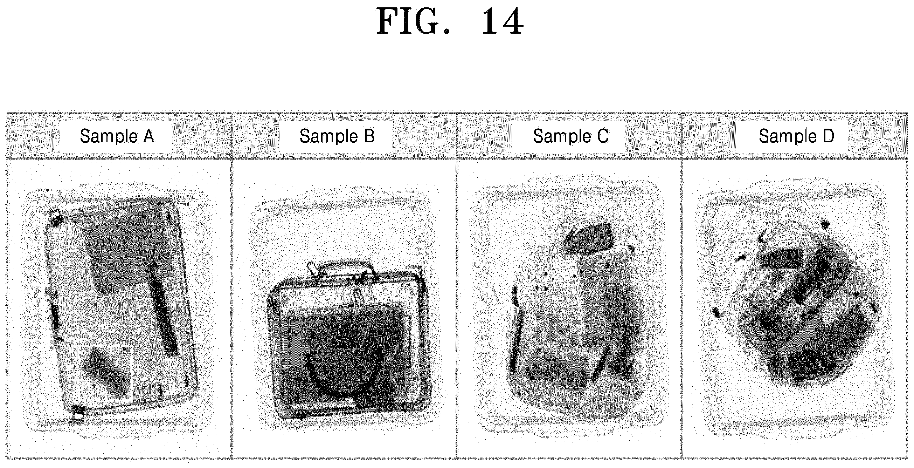

FIG. 14 includes images showing explosive detection results according to some embodiments of the present invention.

As shown in FIG. 14, according to the present invention, not only for solid substances such as samples A and B but also for liquid substances such as samples C and D, the detection accuracy and detection rate for various overlapping hazardous substances, which have failed to be detected or have detected at a low accuracy and detection rate before, may be significantly increased.

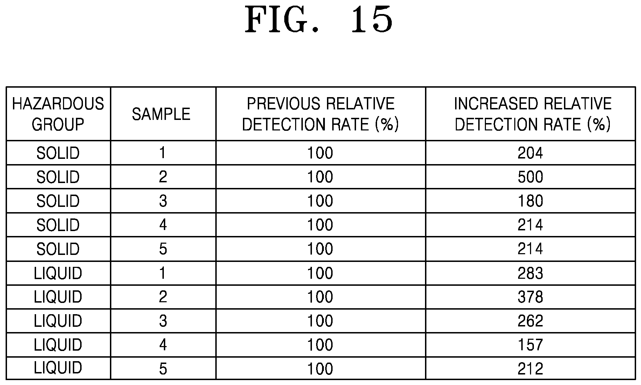

FIG. 15 is a table showing previous relative detection rates versus increased relative detection rates of an object detection method and system according to some embodiments of the present invention.

As shown in FIG. 15, consequently, assuming that the previous relative detection rates of the object detection method and system according to some embodiments of the present invention are 100 %, when the increased relative detection rates of the present invention are expressed as percentages, the detection rates for both solid and liquid samples have increased by more than about 200 % to about 300 % and the detection rate for a specific sample (solid sample 2) has increased by up to 500 %.

According to the afore-described embodiments of the present invention, using effective atomic number values based on an X-ray image and energy-band-based images, the accuracy of object specification and property prediction and a detection rate for not only existing hazardous substances but also liquid substances such as liquid explosives or narcotics may be significantly increased. However, the scope of the present invention is not limited to the above effects.

While the present invention has been particularly shown and described with reference to embodiments thereof, it will be understood by one of ordinary skill in the art that various changes in form and details may be made therein without departing from the scope of the present invention as defined by the following claims.

## Claims

1. An object detection method comprising:
(a) preparing an X-ray image of a subject;
(b) calculating effective atomic number values (Z_{eff}) by using the X-ray image; and
(c) segmenting a target object image from the X-ray image by using the effective atomic number values and energy-band-based multi-energy image reconstruction.

2. The object detection method of claim 1, wherein each of the effective atomic number values (Z_{eff}) is a value proportional to an accumulated sum of nuclei existing on a path of an X-ray.

3. The object detection method of claim 1, wherein step (a) comprises:
(a-1) loading an X-ray image;
(a-2) determining whether the X-ray image is normal, and outputting an error message when the X-ray image is not normal; and
(a-3) standardizing the X-ray image by correcting image distortion based on values of a background region of the X-ray image, or correcting a histogram of the X-ray image to be similar to that of a photographic image, when the X-ray image is normal.

4. The object detection method of claim 1, wherein step (b) comprises:
(b-1) primarily calculating effective atomic number values (Z_{eff}) of the corrected X-ray image;
(b-2) extracting only a region of interest (ROI) image by processing and removing an unnecessary image of a tray supporting the subject, as a background; and
(b-3) segmenting an object image from the X-ray image and a sinogram obtained by visualizing the X-ray image, by using an artificial neural network model.

5. The object detection method of claim 1, wherein step (c) comprises (c-1) dividing the target object image into energy-band-based images in consideration of adjacency or overlapping of the subject, and segmenting individual object images by using the energy-band-based images, in a default detection mode.

6. The object detection method of claim 5, wherein step (c-1) comprises:
(c-1-1) setting energy bands by using the effective atomic number values;
(c-1-2) removing an image other than objects of interest; and
(c-1-3) making an object list with the objects of interest by processing the target object image into N-level energy-band-based images (N is a natural number) from a low density to a high density based on the set energy bands, and adding and integrating effective atomic number and density values of an object from the object list corresponding to a target object, into a table.

7. The object detection method of claim 1, wherein step (c) comprises (c-2) secondarily calculating effective atomic number values (Z_{eff}) by ROI and segmenting a liquid of interest image, in a liquid detection mode.

8. The object detection method of claim 7, wherein step (c-2) comprises:
(c-2-1) setting ROIs and extracting an initial effective atomic number value (ZI0, Z_{eff} Initial Value(0)) by ROI;
(c-2-2) secondarily calculating effective atomic number values (Z_{eff}) by ROI;
(c-2-3) extracting an outline of a container of an object of interest by ROI by using the effective atomic number values, and calculating effective atomic number and density values of the container based on the outline to specify a shape or type of the container; and
(c-2-4) removing noise and then extracting a region of a liquid inside the container, and calculating effective atomic number and density values of the liquid to predict a type or volume of the liquid.

9. The object detection method of claim 8, wherein, in step (c-2-1), for accurate object detection, a region other than objects inside the tray is excluded from the ROIs in consideration of sizes, lengths, and complexity of the objects,
wherein, in step (c-2-3), to separate an extraction region from a background region, a threshold value of image pixels is designated, and a container region is separated from a background of an image by using a difference in brightness or color based on the threshold value.

10. The object detection method of claim 8, wherein, in step (c-2-4), to remove noise caused by a difference in properties between a container and a container cap for sealing the container, a height of a center of an object is measured and an actual volume of the liquid is detected based on a degree of filling.

11. The object detection method of claim 8, wherein, in step (c-2-4), the type of the liquid is predicted in consideration of a substance having a similar distribution of dual-energy-based attenuation rates (R) from a known substance table based on dual energies using high energy and low energy histograms of an internal region from among an entire region and the internal region.

12. The object detection method of claim 1, further comprising (d) comprehensively detecting a hazardous object in consideration of a weight using multi-view images captured from multiple angles,
wherein, in step (d), the weight is a number of target objects detected in an image captured from each view, and for the same subject, a highest weight is determined as a number of objects.

13. An object detection system comprising:
an image inputter for inputting an X-ray image of a subject;
an effective atomic number value calculator for calculating effective atomic number values (Z_{eff}) by using the X-ray image;
a target segmenter for segmenting a target object image from the X-ray image by using the effective atomic number values and energy-band-based multi-energy image reconstruction; and
a multi-view detector for comprehensively detecting a hazardous object in consideration of a weight using multi-view images captured from multiple angles,
wherein the image inputter comprises:
an image loader for loading an X-ray image;
an error outputter for determining whether the X-ray image is normal, and outputting an error message when the X-ray image is not normal; and
a standardizer for standardizing the X-ray image by correcting image distortion based on values of a background region of the X-ray image, or correcting a histogram of the X-ray image to be similar to that of a photographic image, when the X-ray image is normal,
wherein the effective atomic number value calculator comprises:
a primary effective atomic number value calculator for primarily calculating effective atomic number values (Z_{eff}) of the corrected X-ray image;
a region of interest (ROI) extractor for extracting only a ROI image by processing and removing an unnecessary image of a tray supporting the subject, as a background; and
an object image segmenter for segmenting an object image from the X-ray image and a sinogram obtained by visualizing the X-ray image, by using an artificial neural network model, and
wherein the target segmenter comprises:
a default detector for dividing the target object image into energy-band-based images in consideration of adjacency or overlapping of the subject, and segmenting individual object images by using the energy-band-based images, in a default detection mode; and
a liquid detector for secondarily calculating effective atomic number values (Z_{eff}) by ROI and segmenting a liquid of interest image, in a liquid detection mode.

14. The object detection system of claim 13, wherein the default detector comprises:
an energy band setter for setting energy bands by using the effective atomic number values;
an unnecessary image remover for removing an image other than objects of interest; and
an energy-band-based image processor for making an object list with the objects of interest by processing the target object image into N-level energy-band-based images (N is a natural number) from a low density to a high density based on the set energy bands, and adding and integrating effective atomic number and density values of an object from the object list corresponding to a target object, into a table.

15. The object detection system of claim 13, wherein the liquid detector comprises:
a ROI setter for setting ROIs and extracting an initial effective atomic number value ZI0 by ROI;
a secondary effective atomic number value calculator for secondarily calculating effective atomic number values (Z_{eff}) by ROI;
a container identifier for extracting an outline of a container of an object of interest by ROI by using the effective atomic number values, and calculating effective atomic number and density values of the container based on the outline to specify a shape or type of the container; and
a liquid identifier for removing noise and then extracting a region of a liquid inside the container, and calculating effective atomic number and density values of the liquid to predict a type or volume of the liquid.
